# EUROPÄISCHE PATENTSCHRIFT

(11) **EP 3 526 026 B1**
(45) Veröffentlichungstag und Bekanntmachung des Hinweises auf die Patenterteilung: **10.03.2021**
(21) Anmeldenummer: 17787309.8
(22) Anmeldetag: 12.10.2017
(51) Int. Cl.: B31B 70/00, B29C 65/04, B29C 65/08, B29C 65/10, B29C 65/18, B29C 65/50, B29C 65/78, B31B 150/10, B31B 150/20, B31B 160/20, B65D 33/16

(54) **VORRICHTUNG UND VERFAHREN ZUM VERSCHLIESSEN EINES OFFENEN ENDES EINES SCHLAUCHKÖRPERS**
APPARATUS AND METHOD FOR CLOSING AN OPEN END OF A TUBULAR BODY
DISPOSITIF ET PROCÉDÉ POUR FERMER UNE EXTRÉMITÉ OUVERTE D'UN CORPS TUBULAIRE

(30) Priorität: 14.10.2016 AT 5021116 U
(43) Veröffentlichungstag der Anmeldung: 21.08.2019
(73) Patentinhaber: Starlinger & Co Gesellschaft m.b.H., 1060 Wien (AT)
(72) Erfinder: FÜRST, Herbert, 2540 Bad Vöslau (AT)
(74) Vertreter: Margotti, Herwig Franz
(86) Internationale Anmeldenummer: PCT/AT2017/060261
(87) Internationale Veröffentlichungsnummer: WO 2018/068073

(56) Entgegenhaltungen:
- EP-A1- 2 683 617
- US-A- 2 406 791

## Beschreibung

Die Erfindung betrifft eine Vorrichtung und ein Verfahren zum Verschließen eines offenen Endes eines Schlauchkörpers aus Polymergewebe oder Polymervlies, welcher Schlauchkörper flachliegend in einer Querförderrichtung quer zur Längsrichtung des Schlauchkörpers befördert wird, mit einer Aufbringeinheit, welche Aufbringeinheit dazu ausgebildet ist das offene Ende des Schlauchkörpers mit einem V- oder U-förmig gefalteten Materialband zu überziehen und mit dem Schlauchkörper überlappend zu verbinden, sodass das Materialband den Schlauchkörper am offenen Ende umgreift und das offene Ende des Schlauchkörpers verschließt.

Aufgrund ihrer hohen Festigkeit und ihrer Beständigkeit gegenüber äußeren Einflüssen, wie beispielsweise gegenüber Witterung, haben sich Säcke hergestellt aus Polymergewebe zu einer beliebten Alternative zu Papiersäcken und Säcken aus Kunststofffolie entwickelt.

Als Grundlage zur Herstellung eines solchen Sackes aus Polymergewebe wird im allgemeinen ein Schlauchkörper herangezogen, der im flachliegenden Zustand zwei im Wesentlichen parallel zueinander liegende Hauptabschnitte aufweist, die an gegenüberliegenden Seiten über Längsfalten miteinander verbunden sind. Zum Herstellen eines Sackes aus dem Polymergewebe wird eines der zwei offenen Enden des Schlauchkörpers im Bereich des offenen Endes umgefaltet und der umgefaltete Bereich wird mittels einer Nähmaschine mit den Hauptabschnitten vernäht. Als nachteilig dabei hat sich aber erwiesen, dass es durch das Vernähen zu partiellen Schwächungen bzw. Beschädigungen des Gewebes im Bereich der Naht kommen kann. Durch die Schwächung bzw. Beschädigung des Gewebes besteht die Gefahr eines Reißens des Sacks, wodurch die Dichtheit so eines Sackes nicht über seine Lebensdauer gewährleistet werden kann. Darüber hinaus hat sich beim Vernähen der Säcke als nachteilig erwiesen, dass es zu Fadenbrüchen und daraus resultierenden Produktionsstillständen kommen kann. Ferner sind die Nähmaschinen sehr wartungsintensiv und verursachen einen hohen Lärmpegel.

Die oben beschriebenen Nachteile konnten mit einem Sackverschlussverfahren gemäß der europäischen Patentschrift EP 2 683 617 B1 überwunden werden. Bei dem aus der europäischen Patentschrift EP 2 683 617 B1 bekannten Sackverschlussverfahren wird ein offenes Ende des dem Sack zugrunde liegenden Schlauchkörpers mittels eines V- oder U-förmig gefalteten Materialbands verschlossen. Die Vorrichtung umfasst dazu Mittel, mit denen das Materialband über das offene Ende des Schlauchkörpers gezogen wird und gleichzeitig durch die Einbringung von thermischer Energie und Andrücken an dem Schlauchkörper befestigt wird, wodurch das offene Ende des Schlauchkörpers verschlossen und ein Sack gebildet wird. Dieses Sackverschlussverfahren ermöglicht den dichten Verschluss eines Sackes aus Polymergewebe ohne Nähmaschinen. Allerdings eignet sich das Sackverschlussverfahren aus der EP 2 683 617 B1 nur zum zuverlässigen Verschließen eines faltenlosen Schlauchkörpers.

Es ist die Aufgabe der vorliegenden Erfindung ein Verfahren und eine Vorrichtung bereitzustellen, die ohne Verwendung einer Nähmaschine das Auslangen finden und für Sackkörper mit Längsfalten, d.h. Schlauchkörper der beidseitig in Längsrichtung Seitenfalten mit Seitenfaltenwänden zwischen Hauptabschnitten des Schlauchkörpers aufweist, geeignet sind.

Erfindungsgemäß wird die vorliegende Aufgabe dadurch gelöst, dass die Vorrichtung eine Verbindeeinheit aufweist, die in Querförderrichtung vor der Aufbringeinheit angeordnet ist und im Bereich des offenen Endes je eine Seitenfaltenwand mit einem Hauptabschnitt des Schlauchkörpers verbindet.

Bei der Anwendung des Sackverschlussverfahrens gemäß EP 2 683 617 B1 auf einen Schlauchkörper mit Seitenfalten wäre das Materialband mit den Hauptabschnitten verbunden und nur wenig bis gar nicht mit den Seitenfaltenwänden der Seitenfalten verbunden. Würde so ein Sack mit Füllgut befüllt, würden die Seitenfalten nach außen klappen, wodurch einerseits Füllgut aus dem so gebildeten Sack austreten würde und andererseits Schädlinge oder Verschmutzungen in das Sackinnere eindringen könnten.

Erfindungsgemäß weist die Vorrichtung eine Verbindeeinheit auf, die in Querförderrichtung vor der Aufbringeinheit angeordnet ist. Diese ist dazu ausgebildet, im Bereich des offenen Endes je eine Seitenfaltenwand mit einem Hauptabschnitt des Schlauchkörpers zu verbinden. Durch das Verbinden der Seitenfaltenwände mit den Hauptabschnitten im Bereich des offenen Endes, bevor das V-oder U-förmige Materialband durch eine Aufbringeinheit über den Bereich des offenen Endes des Schlauchkörpers gezogen und mit dem Schlauchkörper verbunden wird, ist der Vorteil erhalten, dass ein nach außen Klappen der Seitenfalten verhindert wird und ein dichter Sackverschluss auch bei mit Seitenfalten versehenen Schlauchkörpern hergestellt werden kann. Infolge können ein Austreten von Füllgut aus einem so verschlossenen Seitenfaltensack und ein Eindringen von Verschmutzungen oder Schädlingen in einen so verschlossenen Seitenfaltensack zuverlässig verhindert werden.

Erfindungsgemäß werden durch die Verbindeeinheit auch die Seitenfaltenwände der Seitenfalten im Bereich des offenen Endes des Schlauchkörpers untereinander verbunden. Hierdurch ist der Vorteil erhalten, dass ein durch das Sackverschlussverfahren gebildeter Verschluss des Seitenfaltensackes noch robuster wird.

Es sei hier noch angemerkt, dass das Polymergewebe oder das Polymervlies (nonwoven) beschichtet oder unbeschichtet sein kann und/ oder mit einer bedruckbaren Folie laminiert ausgestaltet sein kann. Die Schlauchstücke können entweder aus einem zu einem Schlauch geformten flächigen Ausgangsmaterial bestehen, wodurch dieser eine Längsnaht aufweist, oder aus einem runden Ausgangsmaterial bestehen.

Weitere Vorteile der erfindungsgemäßen Vorrichtung und des erfindungsgemäßen Verfahrens werden in weiterer Folge anhand der Figuren näher erläutert.
Figur 1 zeigt eine Ausführungsvariante einer erfindungsgemäßen Vorrichtung zum Verschließen eines offenen Endes eines Schlauchkörpers in einer schematischen Ansicht.
Figur 2 zeigt eine Ausführungsvariante eines Systems mit einer erfindungsgemäßen Vorrichtung gemäß Figur 1 in einer schematischen Ansicht.
Figur 3 zeigt eine Ausführungsform eines mit der erfindungsgemäßen Vorrichtung verschlossenen offenen Endes eines Seitenfaltensackes in einer schematischen Ansicht.
Figur 4 zeigt einen Schlauchkörper mit Seitenfalten flachliegend in einer schematischen Seitenansicht.

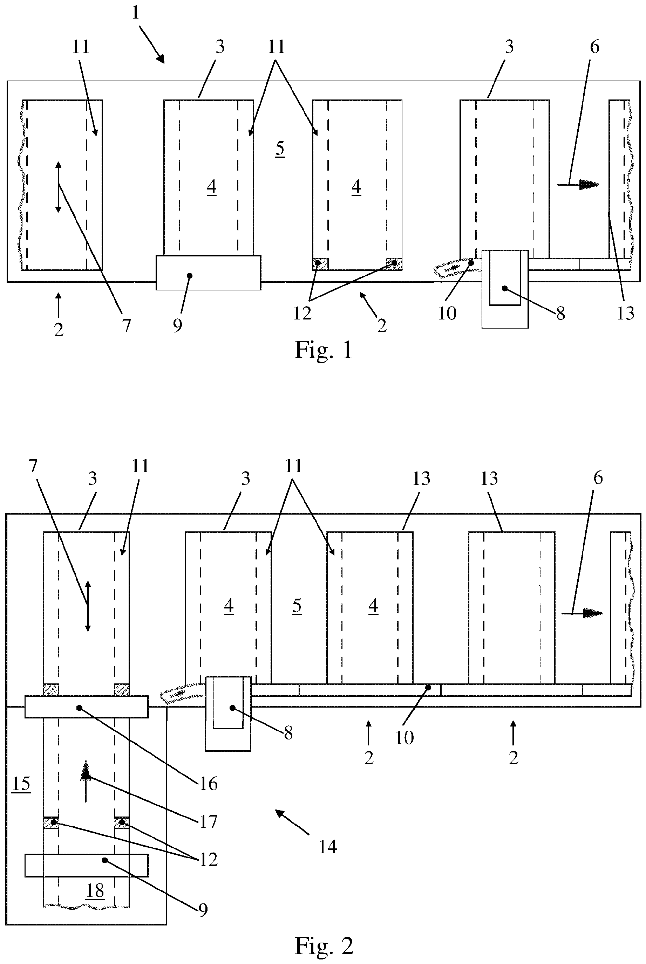

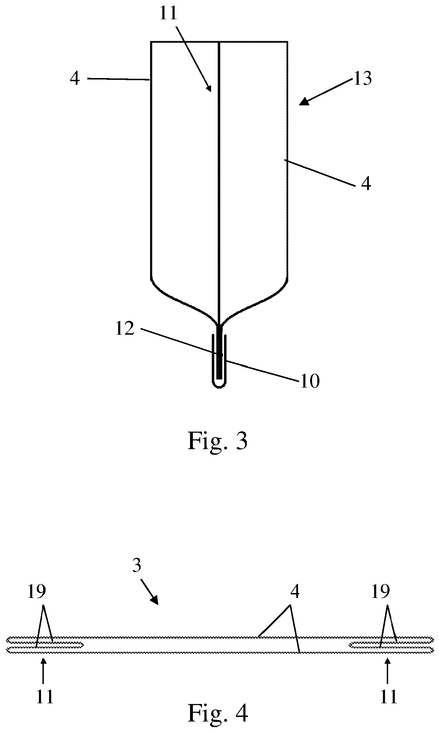

Figur 1 zeigt eine Ausführungsvariante einer erfindungsgemäßen Vorrichtung 1 in einer schematischen Ansicht. Die Vorrichtung 1 ist zum Verschließen von offenen Enden 2 von Schlauchkörpern 3 ausgebildet, welche Schlauchkörper 3 flachliegend durch einen als Förderband 5 ausgebildeten Querförderer in Querförderrichtung 6 quer zu einer Längsrichtung 7 der Schlauchkörper 3 befördert werden. Die Schlauchkörper 3 weisen jeweils zwei Hauptabschnitte 4 auf, die an gegenüberliegenden Kanten parallel zur Längsrichtung 7 an Seitenfalten 11 des Schlauchkörpers 3 angrenzen. Die Seitenfalten 11 sind wiederum jeweils durch zwei Seitenfaltenwände 19 gebildet. Siehe dazu Figur 4. Die Vorrichtung 1 umfasst eine Aufbringeinheit 8 und eine Verbindeeinheit 9, wobei die Verbindeeinheit 9 in Querförderrichtung 6 vor der Aufbringeinheit 8 angeordnet ist. Die Verbindeeinheit 9 ist durch ein Ultraschallschweißgerät gebildet und weist eine nicht dargestellte Rollsonotrode und einen nicht dargestellten Rollamboss auf. Die Aufbringeinheit 8 ist dazu ausgebildet, die offenen Enden 2 der Schlauchkörper 3 mit einem U-förmig gefalteten Materialband 10 zu überziehen und das Materialband 10 mit dem Schlauchkörper 5 an den Hauptabschnitten 4 mittels verschweißen zu verbinden, wobei das Materialband 10 den Schlauchkörper 3 am offenen Ende umgreift und das offene Ende 2 des Schlauchkörpers 3 verschließt.

Im Betrieb der Vorrichtung 1 werden die Schlauchkörper 3 auf dem Förderband 5 in Querförderrichtung 6 befördert, wobei dadurch die offenen Enden 2 der Schlauchkörper 3 beim Passieren der Verbindeeinheit 9 zwischen der Rollsonotrode und dem Rollamboss hindurch bewegt werden. Die Verbindeeinheit 9 verschweißt die Seitenfaltenwände 19 der Seitenfalten 11 miteinander und mit den Hauptabschnitten 4 des Schlauchkörpers 3 nur in Abschnitten 12 im Bereich des offenen Endes 2 des Schlauchkörpers 3. Die Seitenfaltenwände 19 und die Hauptabschnitte 4 können dabei flächig oder zumindest linienförmig quer zur Längsrichtung 7 verschweißt werden. In weiterer Folge werden die offenen Enden 2 der Schlauchkörper 3 mittels der Aufbringeinheit 8 mit einem U-förmig gefalteten Materialband 10 überzogen, wobei das Materialband 10 an jedem Schlauchkörper 3 festgedrückt wird und das offene Ende 2 überlappend mittels heißer Luft an den Hauptabschnitten 4 mit dem Schlauchkörper 3 verschweißt wird. Dabei umgreift das U-förmige Materialband 10 das offene Ende 2 des Schlauchkörpers 3, und es wird das offene Ende 2 des Schlauchkörpers 3 verschlossen und ein Seitenfaltensack 13 gebildet. Siehe dazu Figur 3. Das Materialband 10 wird durch die Aufbringeinheit 8 zwischen zwei aufeinanderfolgenden Schlauchkörpern 3 durchtrennt, wobei überschüssiges Materialband 10 in weiteren, nicht gezeigten Bearbeitungsschritten von den Seitenfaltensäcken 13 abgetrennt wird.

In einer weiteren Ausführungsvariante ist das Materialband 10 V-förmig gefaltet.

In einer weiteren Ausführungsvariante sind die Aufbringeinheit 8 und die Verbindeeinheit 9 in einer Einheit ausgebildet.

In einer weiteren Ausführungsvariante ist die Verbindeeinheit 9 durch eine Klebeauftragseinheit gebildet, wobei die Seitenfaltenwände 19 der Seitenfalten 11 miteinander und mit den Hauptabschnitten 4 der Schlauchkörper 3 beim Transport der Schlauchkörper 3 an der Verbindeeinheit 9 vorbei verklebt werden.

In einer weiteren Ausführungsvariante ist die Verbindeeinheit 9 durch einen Heißluftfön gebildet und das Verschweißen der Seitenfaltenwände 19 der Seitenfalten 11 miteinander und mit den Hauptabschnitten 4 der Schlauchkörper 3 erfolgt durch Heißluft. Auch besteht die Möglichkeit, dass die Verbindeeinheit 9 durch eine Impulsschweißvorrichtung oder durch zumindest ein Heizelement gebildet ist.

Figur 2 zeigt eine Ausführungsvariante eines Systems 14 zum Ablängen von Schlauchkörpern 3 von einem schlauchförmigen Ausgangsmaterial 18 und Verschließen eines offenen Endes 2 der abgelängten Schlauchkörper 3 mit einer erfindungsgemäßen Vorrichtung 1 nach Figur 1 in einer schematischen Ansicht. Das System 14 umfasst einen als Förderband 5 ausgebildeten Querförderer, der die Schlauchkörper 3 in einer Querförderrichtung 6 quer zur Längsrichtung 7 der Schlauchkörper 3 befördert, einen Längsförderer 15, der die Schlauchkörper 3 bzw. das schlauchförmige Ausgangsmaterial 18 in einer Längsförderrichtung 17 parallel zur Längsrichtung 7 der Schlauchkörper 3 befördert, und eine im Bereich des Längsförderers 15 angeordnete Ablängeinheit 16. Die Ablängeinheit 16 ist ausgebildet das schlauchförmige Ausgangsmaterial 18 in die Schlauchkörper 3 abzulängen. Der Längsförderer 15 ist vorteilhaft auch durch ein Förderband oder einen Rollenförderer gebildet und quer zum Förderband 5 angeordnet, wobei der Längsförderer 15 dem Förderband 5 das schlauchförmige Ausgangsmaterial 18 in Längsförderrichtung 17 zuführt. Die abgelängten Schlauchkörper 3 werden beabstandet zueinander kontinuierlich auf dem Förderband 5 abgelegt. Bei dem System 14 ist die Verbindeeinheit 9 im Bereich des Längsförderers 15 in Längsförderrichtung 17 vor der Ablängeinheit 16 angeordnet. Somit werden die Seitenfaltenwände 19 untereinander und mit den Hauptabschnitten 4 noch am schlauchförmigen Ausgangsmaterial 18 und vor dem Ablängen des schlauchförmigen Ausgangsmaterials 18 in die Schlauchkörper 3 verbunden, wobei die Seitenfaltenwände 19 untereinander und mit den Hauptabschnitten 4 nur in Abschnitten 12 miteinander verbunden werden, die nach dem Ablängen des schlauchförmigen Ausgangsmaterial 18 in die Schlauchkörper 3 im Bereich der offenen Enden 2 der Schlauchkörper 3 liegen. Vorteilhaft ist bei dem System 14 die Verbindeeinheit 9 durch ein Ultraschallschweißgerät, eine Impulsschweißvorrichtung oder durch zumindest ein Heizelement gebildet.

In einer weiteren Ausführungsvariante sind die Ablängeinheit 16 und die Verbindeeinheit 9 in einer Einheit ausgebildet.

Figur 3 zeigt einen mit der erfindungsgemäßen Vorrichtung 1 gebildeten Seitenfaltensack 13 in einer schematischen Ansicht.

Figur 4 zeigt einen Schlauchkörper 3 mit Seitenfalten 11 in einer schematischen Ansicht, wobei der Schlauchkörper 3 flach auf einem nicht dargestellten Untergrund aufliegt.

## Patentansprüche

1. Vorrichtung (1) zum Verschließen eines offenen Endes (2) eines Schlauchkörpers (3) aus Polymergewebe oder Polymervlies, welcher Schlauchkörper (3) flachliegend in einer Querförderrichtung (6) quer zur Längsrichtung (7) des Schlauchkörpers (3) befördert wird, mit einer Aufbringeinheit (8), die dazu ausgebildet ist, das offene Ende (2) des Schlauchkörpers (3) mit einem V- oder U-förmig gefalteten Materialband (10) zu überziehen und mit dem Schlauchkörper (3) überlappend zu verbinden, sodass das Materialband (10) den Schlauchkörper (3) am offenen Ende (2) umgreift und das offene Ende (2) des Schlauchkörpers (3) verschließt, **dadurch gekennzeichnet, dass** zum Verschließen eines offenen Endes (2) eines Schlauchkörpers (3), der beidseitig in Längsrichtung (7) Seitenfalten (11) mit Seitenfaltenwänden (19) zwischen Hauptabschnitten (4) des Schlauchkörpers (3) aufweist, die Vorrichtung (1) eine Verbindeeinheit (9) aufweist, die in Querförderrichtung (6) vor der Aufbringeinheit (8) angeordnet und dazu ausgebildet ist, im Bereich des offenen Endes (2) des Schlauchkörpers (3) je eine Seitenfaltenwand (19) mit einem Hauptabschnitt (4) des Schlauchkörpers (3) und im Bereich des offenen Endes (2) die Seitenfaltenwände (19) der Seitenfalten (11) untereinander zu verbinden.

2. Vorrichtung (1) nach Anspruch 1, **dadurch gekennzeichnet, dass** die Verbindeeinheit (9) durch eine Ultraschallschweißeinheit oder einen Heißluftfön gebildet ist.

3. Vorrichtung (1) nach Anspruch 1, **dadurch gekennzeichnet, dass** die Verbindeeinheit (9) durch eine Impulsschweißvorrichtung oder durch zumindest ein Heizelement gebildet ist.

4. Vorrichtung (1) nach Anspruch 1, **dadurch gekennzeichnet, dass** die Verbindeeinheit (9) durch eine Kleberauftragseinheit gebildet ist.

5. System (14) zum Ablängen von Schlauchkörpern (3) von einem schlauchförmigen Ausgangsmaterial (18) und Verschließen eines offenen Endes (2) der abgelängten Schlauchkörper (3) mit einer Vorrichtung (1) nach einem der Ansprüche 1 bis 4, umfassend einen Querförderer (5), der dazu ausgebildet ist, die Schlauchkörper (3) in einer Querförderrichtung (6) quer zur Längsrichtung (7) der Schlauchkörper (3) zu befördern, einen Längsförderer (15), der quer zum Querförderer (5) angeordnet und dazu ausgebildet ist, das schlauchförmige Ausgangsmaterial (18) in Längsförderrichtung (17) parallel zur Längsrichtung (7) zum Querförderer (5) zuzuführen,
und eine im Bereich des Längsförderers (15) angeordnete Ablängeinheit (16), die dazu ausgebildet ist, das schlauchförmige Ausgangsmaterial (18) in die Schlauchkörper (3) abzulängen, wobei der Längsförderer (15) dazu ausgebildet ist, die abgelängten Schlauchkörper (3) an den Querförderer (5) zu übergeben und wobei die Verbindeeinheit (9) im Bereich des Längsförderers (15) in Längsförderrichtung (17) vor der Ablängeinheit (16) angeordnet ist.

6. System (14) nach Anspruch 5, **dadurch gekennzeichnet, dass** die Verbindeeinheit (9) und die Ablängeinheit (16) in einer Einheit zusammengefasst sind.

7. Verfahren zum Verschließen eines offenen Endes (2) eines Schlauchkörpers (3) aus Polymergewebe, welcher Schlauchkörper (3) flachliegend durch einen Querförderer (5) in Querförderrichtung (6) quer zur Längsrichtung (7) des Schlauchkörpers (3) befördert wird, wobei über das offene Ende (2) durch eine Aufbringeinheit (8) ein V- oder U-förmig gefaltetes Materialband (10) gezogen wird und mit dem Schlauchkörper (3) verbunden wird, sodass das V- oder U-förmige Materialband (10) den Schlauchkörper (3) im Bereich des offenen Endes (2) umgreift und verschließt, **dadurch gekennzeichnet, dass** der Schlauchkörper (3) beidseitig in Längsrichtung (7) Seitenfalten (11) mit Seitenfaltenwänden (19) zwischen Hauptabschnitten (4) des Schlauchkörpers (3) aufweist, wobei im Bereich des offenen Endes (2) je eine Seitenfaltenwand (19) mit einem Hauptabschnitt (4) durch eine Verbindeeinheit (9) verbunden wird, bevor das V- oder U-förmige Materialband (10) durch die Aufbringeinheit (8) über den Bereich des offenen Endes (2) des Schlauchkörpers (3) gezogen und mit dem Schlauchkörper (3) verbunden wird, wobei im Bereich des offenen Endes (2) die Seitenfaltenwände (19) durch die Verbindeeinheit (9) untereinander verbunden werden.

## Claims

1. An apparatus (1) for closing an open end (2) of a tubular body (3) made from a polymer fabric or non-woven polymer fabric, which tubular body (3) is conveyed lying flat in a transverse conveying direction (6) transverse to the longitudinal direction (7) of the tubular body (3), having an application unit (8), which is designed to cover the open end (2) of the tubular body (3) with a V-shaped or U-shaped folded material strip (10) and connect said to the tubular body (3) in an overlapping manner, such that the material strip (10) surrounds the tubular body (3) at the open end (2) and closes the open end (2) of the tubular body (3), **characterized in that** for closing an open end (2) of a tubular body (3), which on both sides in the longitudinal direction (7) comprises side folds (11) having side fold walls (19) between main sections (4) of the tubular body (3), the apparatus (1) comprises a connecting unit (9), which, in the transverse conveying direction (6), is arranged in front of the application unit (8) and is designed, in the region of the open end (2) of the tubular body (3), to connect respectively one side fold wall (19) to a main section (4) of the tubular body (3) and in the region of the open end (2), to connect the side fold walls (19) of the side folds (11) to one another.

2. An apparatus (1) according to claim 1, **characterized in that** the connecting unit (9) is formed by an ultra-sound welding unit or a hot-air dryer.

3. An apparatus (1) according to claim 1, **characterized in that** the connecting unit (9) is formed by a pulse welding device or at least by a heating element.

4. An apparatus (1) according to claim 1, **characterized in that** the connecting unit (9) is formed by an adhesive application unit.

5. A system (14) for trimming tubular bodies (3) off a tubular starting material (18) und for closing an open end (2) of the trimmed tubular bodies (3) using an apparatus (1) according to any of claims 1 to 4, including
a transverse conveyor (5), which is designed to convey the tubular bodies (3) in a transverse conveying direction (6) transverse to the longitudinal direction (7) of the tubular bodies (3), a longitudinal conveyor (15), which is arranged transversely to the transverse conveyor (5) and is design to feed the tubular starting material (18) in the longitudinal conveying direction (17) in parallel to the longitudinal direction towards the transverse conveyor (5),
and a trimming unit (16) arranged in the region of the longitudinal conveyor (15), which is designed to trim the tubular starting material (18) into the tubular bodies (3), wherein the longitudinal conveyor (15) is designed to transfer the trimmed tubular bodies (3) to the transverse conveyor (5) and wherein the connecting unit (8) is arranged in the region of the longitudinal conveyor (15) in the longitudinal conveying direction (17) in front of the trimming unit (16).

6. A system (14) according to claim 5, **characterized in that** the connecting unit (9) and the trimming unit (16) are joined as one unit.

7. A method for closing an open end (2) of a tubular body (3) made from a polymer fabric, which tubular body (3) is conveyed lying flat by a transverse conveyor (5) in the transverse conveying direction (6) transverse to the longitudinal direction (7) of the tubular body (3), wherein a V-shaped or U-shaped folded material strip (10) is pulled over the open end (2) and connected to the tubular body (3) by an application unit (8), such that the V-shaped or U-shaped material strip (10) surrounds the tubular body (3) in the region of the open end (2) and closes the open end (2), **characterized in that** on both sides in the longitudinal direction (7), the tubular body (3) comprises side folds (11) having side fold walls (19) between main sections (4) of the tubular body (3), wherein in the region of the open end (2) respectively one side fold wall (19) is connected to a main section (4) by a connecting unit, before the V-shaped or U-shaped material strip (10) is pulled over the region of the open end (2) of the tubular body (3) and connected to the tubular body (3) by the application unit (8), wherein in the region of the open end (2) the side fold walls (19) are connected to one another by the connecting unit (9).

## Revendications

1. Dispositif (1) pour fermer une extrémité ouverte (2) d'un corps tubulaire (3) en tissu polymère tissé ou non tissé, dans lequel ledit corps tubulaire (3) est transporté à plat dans une direction de transport transversale (6) transversalement à la direction longitudinale (7) du corps tubulaire (3), comprenant une unité d'application (8) qui est réalisée de manière à recouvrir l'extrémité ouverte (2) du corps tubulaire (3) avec une bande de matériau (10) repliée en forme de V ou de U et à la connecter au corps tubulaire (3) avec chevauchement, de telle sorte que la bande de matériau (10) vienne en prise autour du corps tubulaire (3) au niveau de l'extrémité ouverte (2) et ferme l'extrémité ouverte (2) du corps tubulaire (3), **caractérisé en ce que**, pour fermer une extrémité ouverte (2) d'un corps tubulaire (3) qui comporte, des deux côtés dans la direction longitudinale (7), des plis latéraux (11) présentant des parois de plis latéraux (19) entre des parties principales (4) du corps tubulaire (3), le dispositif (1) comprenant une unité de connexion (9) qui est disposée dans la direction de transport transversale (6) avant l'unité d'application (8) et qui est réalisée, dans la région de l'extrémité ouverte (2) du corps tubulaire (3), de manière à relier à chaque fois une paroi de pli latéral (19) à une partie principale (4) du corps tubulaire (3) et, dans la région de l'extrémité ouverte (2), à relier entre elles les parois de plis latéraux (19) des plis latéraux (11).

2. Dispositif (1) selon la revendication 1, **caractérisé en ce que** l'unité de connexion (9) est formée par une unité de soudage par ultrasons ou un dispositif de séchage à air chaud.

3. Dispositif (1) selon la revendication 1, **caractérisé en ce que** l'unité de connexion (9) est formée par un dispositif de soudage par impulsions ou par au moins un élément chauffant.

4. Dispositif (1) selon la revendication 1, **caractérisé en ce que** l'unité de connexion (9) est formée par une unité d'application d'adhésif.

5. Système (14) pour couper à longueur des corps tubulaires (3) d'un matériau de départ tubulaire (18) et fermer une extrémité ouverte (2) des corps tubulaires (3) coupés à longueur à l'aide d'un dispositif (1) selon l'une quelconque des revendications 1 à 4, comprenant un transporteur transversal (5) qui est réalisé de manière à transporter les corps tubulaires (3) dans une direction de transport transversale (6) transversalement à la direction longitudinale (7) des corps tubulaires (3), un transporteur longitudinal (15) qui est disposé transversalement au transporteur transversal (5) et qui est réalisé de manière à transporter le matériau de départ tubulaire (18) dans la direction de transport longitudinale (17) parallèlement à la direction longitudinale (7) du transporteur transversal (5), et une unité de coupe à longueur (16) qui est disposée dans la région du transporteur longitudinal (15) et qui est réalisée de manière à couper à longueur le matériau de départ tubulaire (18) dans les corps tubulaires (3), le transporteur longitudinal (15) étant réalisé de manière à transférer les corps tubulaires (3) coupés à longueur au transporteur transversal (5), et l'unité de connexion (9) étant disposée dans la région du transporteur longitudinal (15) dans la direction de transport longitudinale (17) avant l'unité de coupe à longueur (16).

6. Système (14) selon la revendication 5, **caractérisé en ce que** l'unité de connexion (9) et l'unité de coupe à longueur (16) sont intégrées en un seul dispositif.

7. Procédé pour fermer une extrémité ouverte (2) d'un corps tubulaire (3) en tissu polymère tissé, dans lequel ledit corps tubulaire (3) est transporté à plat par un transporteur transversal (5) dans la direction de transport transversale (6) transversalement à la direction longitudinale (7) du corps tubulaire (3), une bande de matériau (10) repliée en forme de V ou de U étant tirée sur l'extrémité ouverte (2) par une unité d'application (8) et étant connectée au corps tubulaire (3), de telle sorte que la bande de matériau (10) en forme de V ou de U vienne en prise autour du corps tubulaire (3) dans la région de l'extrémité ouverte (2) et ferme ladite extrémité ouverte, **caractérisé en ce que** le corps tubulaire (3) comporte, des deux côtés dans la direction longitudinale (7), des plis latéraux (11) présentant des parois de plis latéraux (19) entre des parties principales (4) du corps tubulaire (3), une paroi de pli latéral (19) étant, dans la région de l'extrémité ouverte (2), reliée à chaque fois à une partie principale (4) par une unité de connexion (9), avant que la bande de matériau (10) en forme de V ou de U soit tirée sur la région de l'extrémité ouverte (2) du corps tubulaire (3) par l'unité d'application (8) et reliée au corps tubulaire (3), les parois de plis latéraux (19) étant, dans la région de l'extrémité ouverte (2), reliées entre elles par l'unité de connexion (9).
